# EUROPEAN PATENT APPLICATION

(11) **EP 2 469 980 A2**
(43) Date of publication of application: **27.06.2012**
(21) Application number: 11189506.6
(22) Date of filing: 17.11.2011
(51) Int. Cl.: H05B 33/08

(54) **Array constant-current multi-driving circuit**

(30) Priority: 24.12.2010 TW 99225023
(71) Applicant: Mao, Lih-Wen, New Taipei City 221 (TW)
(72) Inventor: Mao, Lih-Wen, New Taipei City 221 (TW)
(74) Representative: Gervasi, Gemma

(57) **Abstract**

An array constant-current multi-driving circuit drives a plurality of light-emitting devices connected in parallel. Each light-emitting device includes a plurality of light-emitting diodes (LED) connected in series. The constant-current multi-driving circuit includes a bias circuit for generating a bias voltage, a Keener diode controlled by the bias voltage and being capable of clamping an output voltage to a predetermined reference voltage value, and an amplifying circuit controlled by the reference voltage value and for outputting a driving current for driving the light-emitting devices. Through the predetermined reference voltage and a second resistor connected to a second transistor in each light-emitting device, the light-emitting devices are enabled to operate under a constant current, thereby achieving a target of driving a plurality of light-emitting devices under a constant current with a single Keener diode.

## Description

### FIELD OF THE INVENTION

The present invention relates to a light-emitting diode (LED) driving circuit, and more particularly, to an array constant-current multi-driving circuit capable of driving a plurality of light-emitting devices through a constant current.

### BACKGROUND OF THE INVENTION

A light-emitting diode (LED) contributes advantages of having a long lifespan and low power consumption as well as being outstanding in power-saving. Therefore, lighting instruments utilizing the LED as a light source have prospered and become prevalent in the daily life.

An LED tube in general comprises a plurality of light emitting devices each comprising a plurality of serially connected LED strings, such that a line light source is provided collectively according to spot light sources of the LEDs. Since a brightness of each LED is directly proportional to a current flowing through the LED, a stable constant current source is necessary in order to provide a stable light source.

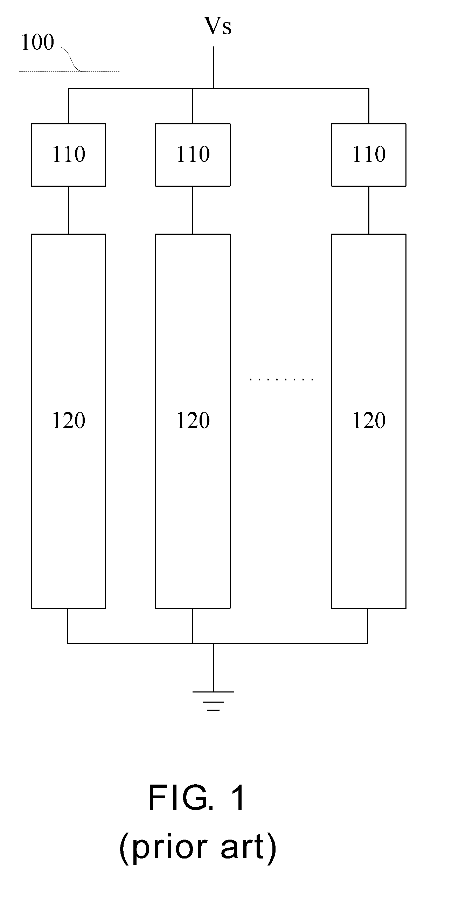

FIG. 1 shows a schematic diagram of a circuit of a conventional LED tube. The LED tube comprises a plurality of light-emitting devices 100 each comprising a driving circuit 110 and a plurality of serially connected LED strings 120. To achieve a uniform brightness, each driving circuit 110 needs to provide a same current to a subsequently connected LED string 120. However, a driving circuit 110 may comprise a great number of electronic components. Thus, qualities of the electronic components should be strictly selected to yield each driving circuit 110 with exact operating characteristics, and such strict selection for the electronic components based on different criteria may increase manufacturing costs while also reducing efficiency.

### SUMMARY OF THE INVENTION

It is an object of the present invention to provide an array constant-current multi-driving circuit capable of driving a plurality of light-emitting devices through a constant current.

It is another object of the present invention to provide a method for simplifying a process of quality selection for electronic components.

It is yet another object of the present invention to provide an array constant-current multi-driving circuit for achieving a voltage-current conversion with a simple circuit structure and to optimize a current driving capability of the array constant-current multi-driving circuit.

In order to achieve the above and other objectives, an array constant-current multi-driving circuit is provided according to an aspect of the present invention. The array constant-current multi-driving circuit is for driving a plurality of light-emitting devices connected in parallel, wherein each light-emitting device comprises a plurality of LEDs connected in series. The array constant-current multi-driving circuit comprises a bias circuit, a Keener diode and an amplifying circuit. The bias circuit, being connected to a power source, generates a bias voltage. The Keener diode, being connected to the bias circuit, comprises a predetermined reference voltage value, and is conducted when the bias voltage is greater than the predetermined reference voltage value. The amplifying circuit, being connected to the bias circuit and the Keener diode, amplifies a received current and driving each light-emitting device. The amplifying circuit and the light-emitting devices are mutually grounded.

In an embodiment according to the present invention, the amplifying circuit comprises a first transistor. The first transistor has its collector connected to the power source, its base connected between the bias circuit and the Keener diode, and its emitter connected to a base of a second transistor in each light-emitting device.

In an embodiment according to the present invention, each light-emitting device comprises: a serially connected light-emitting unit, having its one end connected to the power source and being serially connected with the LEDs; a second transistor, having its collector connected to the other end of the serially connected light-emitting unit; and a second resistor, having its one end connected to the emitter of the second transistor and its end mutually grounded with the amplifying circuit.

In an embodiment according to the present invention, the first and second transistors may be bipolar junction transistors. The bias circuit may comprise a first resistor for controlling a bias voltage applied to the Keener diode, and the bipolar junction transistors may by NPN bipolar junction transistors.

Therefore, by utilizing a set of circuit to drive a plurality of light-emitting devices in an array, a qualified Keener diode is capable of driving a plurality of light-emitting devices instead of having to respectively provide a qualified Keener diode of each light-emitting diode, thereby reducing manufacturing costs while optimizing manufacturing efficiency.

### BRIEF DESCRIPTION OF THE DRAWINGS

The present invention will become more readily apparent to those ordinarily skilled in the art after reviewing the following detailed description and accompanying drawings, in which:

FIG. 1 is a schematic diagram of a circuit of a conventional LED tube; and

FIG. 2 is a schematic diagram of an array constant-current multi-driving circuit according to an embodiment of the present invention.

### DETAILED DESCRIPTION OF THE PREFERRED EMBODIMENTS

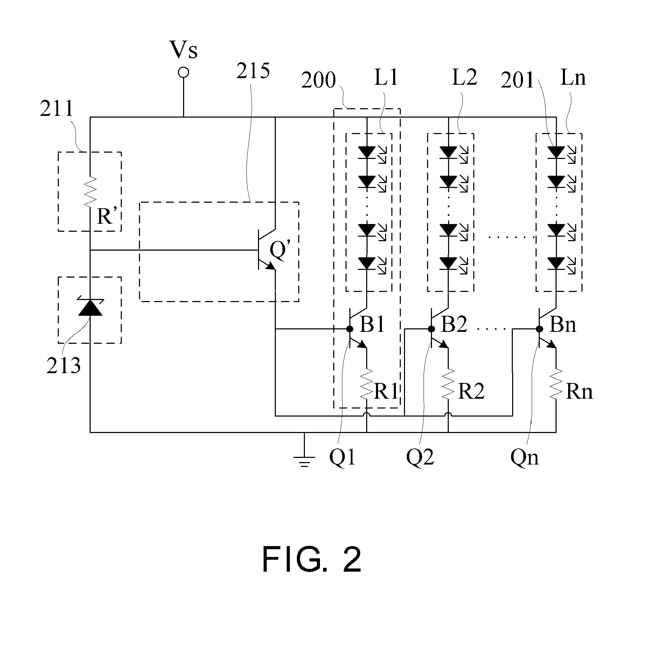

FIG. 2 shows a schematic diagram of an array constant-current multi-driving circuit according to an embodiment of the present invention. The array constant-current multi-driving circuit is for driving a plurality of light-emitting devices 200 connected in parallel, and each light-emitting device 200 comprises a plurality of serially connected LEDs 201. For example, the light-emitting devices 200 may be light tubes or backlight units of various electronic apparatuses.

Referring to FIG. 2, the array constant-current multi-driving circuit according to an embodiment of the present invention comprises a bias circuit 211, a Keener diode 213 and an amplifying circuit 215. The light-emitting devices 200 comprise serially connected light-emitting units L1 to Ln, second transistors Q1 to Qn, and second resistors R1 to Rn. A power source Vs provides a stable voltage source.

In the array constant-current multi-driving circuit of the present invention, the bias circuit 211 is connected to the power source Vs to generate a bias voltage provided to the Keener diode 213; that is, the Keener diode 213 is connected to the bias circuit 211. The Keener diode serves as a constant-voltage component due to its characteristic of an unchanged voltage during reverse breakdown, and so a reverse voltage is applied to the Keener diode. When a current provided by the power source Vs reaches an appropriate predetermined current, it means that the appropriate current enables the bias circuit 211 to provide the bias voltage to the Keener diode 213, and the bias circuit 211 outputs a stable reference voltage when the bias voltage is equal to or greater than a predetermined breakdown voltage of the Keener diode 213. Accordingly, circuits connected in parallel with the Keener diode 213 are given a stable reference voltage. In an embodiment, on the basis of operating characteristics of the Keener diode 213, the bias circuit 211 preferably comprises a first resistor R' to provide the predetermined bias voltage to the Keener diode under an appropriate current. Further, since the current provided to the Keener diode 213 is limited and insufficient for driving the second transistors Q1 to Qn in the light-emitting devices 200, a first-order buffer is preferably added to increase driving capabilities of the current. Thus, by utilizing the amplifying circuit 215 connected to the bias circuit 211 and the Keener diode 213, the received current can be amplified to drive each light-emitting device 200. The amplifying circuit 215 serves as a current buffer, which may be realized by a transistor, and a current gain of the transistor may be utilized for reinforcing the driving capability of the current. The current gain is a known conventional electronic technique and shall not be described for brevity.

The amplifying circuit 215 serving as a buffer may achieve a desired current gain by utilizing a plurality of transistors. Referring to FIG. 2, a transistor, i.e., a first transistor Q' taken as an example, is connected to a plurality of transistors to boost a driving current. The first transistor Q' has its collector connected to the power source Vs, its base connected between the bias circuit 211 and the Keener diode 213, and its emitter connected to bases B1 to Bn of the second transistors Q1 to Qn in the light-emitting devices 200. The first transistor Q' is further operative to provide a constant current to the light-emitting devices 200 through a predetermined reference voltage value and second resistors R1 to Rn connected to the emitters of the second transistors Q1 to Qn in the light-emitting devices 200. In an embodiment, the first transistor Q' and the second transistors Q1 to Qn may be bipolar junction transistors and may preferably be NPN bipolar junction transistors. Further, the other end of the second resistors R1 to Rn may be mutually grounded with the amplifying circuit 215.

Operation details of the array constant-current multi-driving circuit shall be described below. The bases B1 to Bn of the second transistors Q1 to Qn corresponding to the light-emitting units L1 to Ln are connected to the emitter of the first transistor Q', and so the bases B1 to Bn of the second transistors Q1 to Qn have a same potential. Under normal conditions, the Keener diode 213 first reaches the breakdown voltage and is then clamped to the predetermined reference voltage value. Under the reference voltage value, the base of the first transistor Q' in the amplifying circuit 215 is then turned on and conducted while the second transistors Q1 to Qn in the light-emitting devices 200 also become conducted. When second transistors Q1 to Qn are conducted, the emitters of the second transistors Q1 to Qn also have a same potential. Accordingly, with the arrangement of the second resistors R1 to Rn, an appropriate operating current for the LED 201 is provided. That is, the current at the emitters of the second transistors Q1 to Qn are also the same. Therefore, as a result of characteristics of the bipolar junction transistors, the emitter current of the second transistors Q1 to Qn is the same as the collector current, such that a same current also flows through the corresponding light-emitting unit connected in series to achieve targets of a constant current and a uniform current for the light-emitting devices 200 connected in series. In conclusion, with a single Keener diode and associated components described above, the present invention provides a circuit capable of generating a constant current source and regards a reference voltage generated by the Keener diode as basis for voltage-current conversion, so as to provide an operation mode of a constant current for the serially connected light-emitting units L1 to Ln in the array light-emitting devices, thereby realizing a driving circuit capable of reducing manufacturing costs as well as optimizing efficiency.

While the invention has been described in terms of what is presently considered to be the most practical and preferred embodiments, it is to be understood that the invention is only illustrative and needs not to be limited to the above embodiments. On the contrary, it is intended to cover various modifications and similar arrangements included within the spirit and scope of the appended claims which are to be accorded with the broadest interpretation so as to encompass all such modifications and similar structures.

## Claims

1. An array constant-current multi-driving circuit, for driving a plurality of light-emitting devices connected in parallel, each light-emitting device comprising a plurality of light-emitting diodes (LED) connected in series, the array constant-current multi-driving circuit comprising:
a bias circuit, connected to a power source to generate a bias voltage;
a Keener diode, connected to the bias circuit, comprising a predetermined reference voltage value, being conducted when the bias voltage is greater than the predetermined reference voltage value; and
an amplifying circuit, connected to the bias circuit and the Keener diode, for amplifying a received current and driving the light-emitting devices; wherein, the amplifying circuit and the light-emitting devices are mutually grounded.

2. The array constant-current multi-driving circuit as claimed in claim 1, wherein the amplifying circuit comprises a first transistor, and the first transistor has a collector connected to the power source, a base connected between the bias circuit and the Keener diode, and an emitter connected to a base of a second transistor in each light-emitting device.

3. The array constant-current multi-driving circuit as claimed in claim 1, wherein each light-emitting device comprises:
a serial light-emitting unit, having one end connected to the power source, and serially connected to the LEDs,
a second transistor, having a collector connected to another end of the serial light-emitting unit; and
a second resistor, having one end connected to the emitter of the second transistor and another end mutually grounded with the amplifying circuit.

4. The array constant-current multi-driving circuit as claimed in claim 1 or claim 3, wherein the first and the second transistors are bipolar junction transistors.

5. The array constant-current multi-driving circuit as claimed in claim 4, wherein the bias circuit comprises a first resistor for controlling a bias voltage applied to the Keener diode.

6. The array constant-current multi-driving circuit as claimed in claim 5, wherein the bipolar junction transistors are NPN bipolar junction transistors.

7. The array constant-current multi-driving circuit as claimed in claim 4, wherein the bipolar junction transistors are NPN bipolar junction transistors.
